# EUROPEAN PATENT APPLICATION

(11) **EP 0 916 710 A1**
(43) Date of publication of application: **19.05.1999**
(21) Application number: 98923078.4
(22) Date of filing: 01.06.1998
(51) Int. Cl.: C09J 7/02, H01B 13/00, H02G 3/26

(54) **ADHESIVE TAPE FOR BINDING WIRE HARNESSES**

(30) Priority: 18.06.1997 JP 161229/97
(71) Applicant: SLIONTEC CORPORATION, Kanagawa 214 (JP)
(72) Inventor: HASHIMOTO, Katsumi, Sliontec Corporation, Kawasaki-shi, Kanagawa 214-0014 (JP); BITOH, Noriyoshi, Sliontec Corporation, Kawasaki-shi, Kanagawa 214-0014 (JP); IWAMURA, Hiroyuki, Sliontec Corporation, Kawasaki-shi, Kanagawa 214-0014 (JP); UCHIDA, Shigeo, Sliontec Corporation, Kawasaki-shi, Kanagawa 214-0014 (JP); KAWAMOTO, Isao, Sliontec Corporation, Kawasaki-shi, Kanagawa 214-0014 (JP)
(74) Representative: Linn, Samuel Jonathan
(86) International application number: JP9802426
(87) International publication number: WO9858032

(57) **Abstract**

The present invention relates to a wire harness binding adhesive tape used for binding wire harnesses. A pressure sensitive adhesive layer (12) containing butyl rubber and/or ethylene-propylene rubber is provided on one surface of a substrate (11) made of cotton cloth, cotton non-woven fabric, polyester woven fabric or the like and a release agent layer (13) is provided on the opposed surface of the substrate (11) to the one surface thereof, whereby the adhesive tape is improved on heat resistant durability, noise silencing ability and workability in use.

## Description

### BACKGROUND OF THE INVENTION

### 1. Field of the Invention

The present invention relates to a wire harness binding adhesive tape used for binding wire harnesses and particularly, to a wire harness binding adhesive tape having characteristics of excellency in, especially, heat resistant durability, fire resistance, noise silencing ability, hand-tearing property and the like, wherein a noise silencing ability is a property to weaken a noise generated from touching between objects and a hand tearing property is a property that a tape is torn into pieces perpendicularly or obliquely to a length direction under a tensile stress imposed by hands.

### DESCRIPTION OF RELATED ART

Heretofore, there has been adopted an cloth adhesive tape produced by applying a pressure sensitive adhesive composition including natural rubber on cotton cloth or the like as a wire harness binding tape excellent in noise silencing ability and hand-tearing property, as disclosed in the published Unexamined Japanese Utility Model Application No. Hei 4-643.

Recently, a wire harness has been employed in all component positions of an automobile, including the peripheral area of an engine.

In the above case, if a conventional adhesive tape produced by applying a pressure sensitive adhesive composition including natural rubber on cotton cloth or the like is used as a wire harness binding adhesive tape in the vicinity of an engine, a good silencing ability is exerted but the adhesive tape comes to be unable to endure a high temperature in the vicinity of the engine after about 100 hours are elapsed in use and thereby, causes an accident such as peeling-off or the like, which has been a problem in a practical phase.

In order to solve such a problem, while there has been a strong desire for a wire harness binding tape excellent in not only noise silence and hand-tearing, but heat resistant durability and fire resistance, the wire harness binding tape with such characteristics has not been able to be produced by prior arts, as has been described.

### SUMMARY OF THE INVENTION

The present invention has been made to solve the above described problem and it is, accordingly, an object of the present invention is to provide a wire harness binding adhesive tape, which solves the above described problem, that is a problem of insufficient heat resistant durability of a conventional wire harness binding adhesive tape, and which is excellent in not only noise silencing ability and hand-tearing property but heat resistant durability and fire resistance.

In order to achieve the object, in the present invention, a pressure sensitive adhesive composition containing butyl rubber and/or ethylene-propylene rubber is used and a wire harness binding adhesive tape is produced by applying the pressure sensitive adhesive composition on one surface of a substrate. By such a constitution, a pressure sensitive adhesive is improved on its heat resistant durability by a great margin and as a result, when thus constituted adhesive tape is used for binding wire harnesses in a high temperature environment in the vicinity of an engine of an automobile or the like, the adhesive tape can endure its use at a high temperature for a long time and adhesive tape related accidents such as peeling-off or the like can thereby be suppressed.

Cotton cloth is used as an example of a substrate in a wire harness binding adhesive tape of the present invention. Cotton cloth has an impact relaxing property and if a warp yarn is weaker in strength than a weft yarn, cotton cloth is easy to be torn off only along the weft yarn, but a sufficient tensile strength can be available. Hence, when cotton cloth is adopted as a substrate, a wire harness binding adhesive tape with excellency in noise silencing ability due to impact relaxation, a good hand tearing property and in addition, a strong tensile strength can be produced.

Furthermore, when a release agent layer is provided on an opposed side surface of a substrate to the surface thereof on which an adhesive layer is applied, adhesion with the opposed surface is suppressed and an adhesive tape reel in multiple turns can be unwound with ease, wherein a release agent is a material which makes peeling-off from the surface of an adhesive to be easy and for example, polyvinyl alcohol based material, silicone based material or the like can be used as a release agent.

In a wire harness binding adhesive tape of the present invention, as another example of a substrate material, non-woven fabric is used. As non-woven fabric, for example, cotton non-woven fabric with a thickness, preferably, in the range of 0.2 to 0.6 mm, which does not contain any binder, is used. Such non-woven fabric has an impact relaxing property and easy to be torn off by hands. Hence, when such non-woven fabric is used as substrate material, a wire harness binding adhesive tape excellent in noise silencing ability and hand tearing property can be produced and in addition, the substrate is low in price, whereby a total cost of the adhesive tape can be reduced.

In this case, when a resin layer is provided on an opposed side surface of the substrate to the surface thereof on which the pressure sensitive adhesive layer is applied and a release agent layer is further provided on the resin layer, not only can a strength of the substrate be increased but adhesion with the opposed surface is suppressed and unwinding of an adhesive tape reel in multiple turns is made easier. As a resin layer, a polyolefin film, preferably a polyethylene film with a thickness in the range of 10 to 45µm is used. Since such a polyethylene layer has a thickness of 10µm or more, the layer supplements the non-woven fabric with a sufficient increase in strength and at the same time since a thickness is 45µm or less, a hand tearing property thereof is not lost by any rate.

Besides, in this case, a polyethylene film colored in black using carbon black, with a thickness in the range of 10 to 45µm and with emboss finish can also be used as a resin layer. When a wire harness binding adhesive tape of the present invention with such a polyethylene layer is used, wire harnesses can be bound in a not-conspicuous way with the tape.

What's more, in this case, if non-woven fabric, all over whose surface small through holes are distributed, is used, no delamination occurs in the non-woven fabric bulk when in unwinding of an adhesive tape on a reel in multiple turns. Hence, the adhesive tape can be peeled off with ease from the surface of the pressure sensitive adhesive layer in the next turn. The reason why is that when a resin layer such as a polyethylene or the like is laminated on non-woven fabric, a resin such as polyethylene or the like penetrates into small through holes provided across the entire surface of the non-woven fabric and reinforces the non-woven fabric especially around the through holes.

Delamination is a phenomenon that non-woven fabric is divided into a pressure sensitive adhesive layer side and a resin layer side and even if delamination occurred in the non-woven fabric, the delamination could not propagate through the fabric bulk but stopped at peripheral regions of the through holes where reinforcement is given to an especially high level as described above, which would entail no large scaled delamination to occur.

It is desired that the above described through holes each have an opening with a diameter in the range of 0.5 to 2 mm on the surface of the non-woven fabric and a total area of the openings of the through holes is equal to 10 to 35 % of the apparent surface area of the non-woven fabric. If a diameter of each of the openings is less than 0.5 mm, incorporation of resin into a though hole is decreased, which entails insufficient reinforcement of the non-woven fabric. On the other hand if a diameter of each of the openings is more than 2 mm, there arise places where a distance between adjacent two openings is larger than 2 mm and reinforcement of the non-woven fabric in such places is insufficient. Hence, in both cases, delamination is a risk to occur. Besides, if a total area of through hole openings is less than 10 % of the apparent surface area of non-woven fabric, reinforcement of the non-woven fabric becomes insufficient and on the other hand, if a total area of through hole openings is larger than 35 % of the apparent surface area of non-woven fabric, a percentage of the effective surface area of the non-woven fabric to the total area of a tape is reduced and a noise silencing effect is decreased by an amount corresponding to the areal reduction. Under such conditions, since an area of one through hole opening is equal to or less than 3.2 mm², through holes are distributed at a rate of one hole or more in each surface area of non-woven fabric of 32 mm² on the average. In the mean time, there is no specific limitation to a shape of a through hole, especially to a circle.

In a wire harness binding adhesive tape of the present invention, another example of a substrate material in use is polyester woven fabric. In this case, as preferred conditions, warp yarns constituting the polyester woven fabric each are a polyester yarn of 30 to 50 deniers with a tensile strength in the range of 150 to 250 gf/yarn and weft yarns constituting the fabric each are a polyester yarn of 80 to 120 deniers with a tensile strength in the range of 380 to 460 gf/yarn.

A thickness of the woven fabric is in the range of 0.04 to 0.12 mm, a tensile strength in a length direction of the adhesive tape is in the range of 6 to 14 kgf/19mm and an elongation of the fabric is in the range of 13 to 23 %.

Such polyester woven fabric has a impact relaxing property and can be torn by hands with ease. Therefore, when the fabric is used as substrate material, production of a wire harness binding adhesive tape which is excellent in noise silencing ability and hand tearing property can be realized. Besides, since the substrate is relatively low in price, a total cost of an adhesive tape can be reduced.

In this case, a polyethylene film layer with a thickness in the range of 10 to 45µm, subjected to embossment and colored in black with carbon black is provided on an opposed side surface of the substrate made of the polyester woven fabric, to the surface thereof on which the pressure sensitive adhesive layer is provided, and a release agent layer is overlapped on the polyethylene film layer.

When in a wire harness binding adhesive tape of the present invention, a fireproofing compound or a flame retardant agent is mixed in a pressure sensitive adhesive layer, use of the adhesive tape in a high temperature environment is safer.

In this case, as a further safer condition, when in a wire harness binding adhesive tape of the present invention, a fireproofing compound or a flame retardant, which does not include a halogen element, is mixed in a pressure sensitive adhesive layer, generation of dioxin is suppressed in incineration thereof.

Furthermore, when in a wire harness binding adhesive tape of the present invention, a fireproofing blowing agent or a fireproofing expansible thermoplastic resin is mixed in a pressure sensitive adhesive layer, the pressure sensitive adhesive layer comes to have an impact relaxing property and a fire resistance, and thereby, the adhesive tape comes not only to have a further improved noise silencing ability but to be safer in use in a high temperature environment.

What's more, when in a wire harness binding adhesive tape of the present invention, a blowing agent or an expansible thermoplastic resin is mixed in a pressure sensitive adhesive layer, the pressure sensitive adhesive layer comes to have an impact relaxing property and thereby a noise silencing ability of the adhesive tape is further improved.

Besides, in a wire harness binding adhesive tape of the present invention, a pressure sensitive adhesive composition in a pressure sensitive adhesive layer containing butyl rubber is at least composed of, for example, 100 parts by weight of butyl rubber, 20 to 80 parts by weight of a tackifier and 15 to 50 parts by weight of a process oil and in addition, contains an antiaging reagent, calcium bicarbonate and the like.

As butyl rubber, isobutylene-isoprene rubber, reclaimed isobutylene-isoprene rubber, pre-crosslinked isobutylene-isoprene rubber and a mixture thereof can be used.

Furthermore, in a wire harness binding adhesive tape of the present invention, a pressure sensitive adhesive composition in a pressure sensitive adhesive layer containing ethylene-propylene rubber is at least composed of, for example, 100 parts by weight of ethylene-propylene rubber, 20 to 80 parts by weight of a tackifier and 15 to 50 parts by weight of a process oil and in addition, contains an antiaging reagent, calcium bicarbonate and the like.

Any pressure sensitive adhesive composition prepared according to the above weight part ratios is excellent in heat resistant durability and adhesiveness, and has a high tensile strength.

### BRIEF DESCRIPTION OF THE DRAWINGS

FIG. 1 is a schematic sectional view showing a part of a wire harness binding adhesive tape pertaining to the present invention;
FIG. 2 is a schematic sectional view showing a part of another example of a wire harness binding adhesive tape pertaining to the present invention; and
FIG. 3 is a graph showing evaluation results of a heat resistant durability of a wire harness binding adhesive tape pertaining to the present invention.

### DETAIL DESCRIPTION OF THE PREFERRED EMBODIMENTS

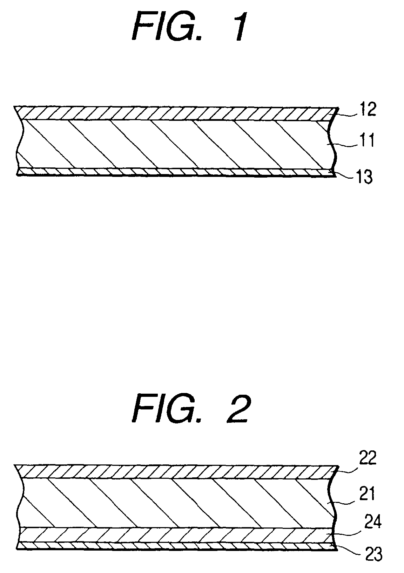

FIG. 1 is a schematic sectional view showing a part of a wire harness binding adhesive tape pertaining to the present invention. As shown in the figure, a pressure sensitive adhesive layer 12 is provided on one surface of a substrate 11 made of cotton cloth with a thickness in the range of 0.2 to 0.6 mm and a release agent layer 13 is provided on the opposed side surface of the substrate 11 to the one surface thereof on which the pressure sensitive adhesive layer 12 is provided.

In the wire harness binding adhesive tape, since the substrate 11 is made of cotton cloth, a noise silencing ability due to an impact relaxing property is large and when a warp yarn of the cotton cloth is set to be weaker than a weft yarn, the cloth is easier to be torn off only along the weft yarn and a hand tearing property is good. Besides, since a thickness of the substrate 11 is set to be 0.2 mm or more, a noise silencing ability of the substrate 11 is sufficient and thereby, since the substrate 11 has an enough strength to endure a tensile stress in winding when a length of an adhesive tape is larger, the long sized adhesive tape can be realized with ease. In addition, since a thickness of the substrate 11 is set to be equal to or less than 0.6 mm, a size of a bundle of wire harnesses, wherein the harnesses are bound together using the adhesive tape, has no chance to grows excessively large. Besides, since the release agent layer 13 is provided on the opposed side surface of the substrate 11 to the one surface thereof on which the pressure sensitive adhesive layer 12 is provided, adhesion with the opposed side surfaces is suppressed and the adhesive tape of a reel in multiple turns can be unwound with ease, which makes workability improved.

FIG. 2 is a schematic sectional view showing a part of another example of a wire harness binding adhesive tape pertaining to the present invention. As shown in the figure, a resin layer 24 is provided on an opposed side surface of a substrate 21 made of cotton non-woven fabric to the surface thereof on which a pressure sensitive adhesive layer 22 is provided and a release agent layer 23 is laminated on the resin layer 24.

In the wire harness binding adhesive tape, since the substrate 21 is made of cotton non-woven fabric, a noise silencing ability is large based on an impact relaxing property of the cotton non-woven fabric and a hand tearing property is also good. Besides, when cotton non-woven fabric with no binder is used as the substrate 21 and a thickness thereof is selected to be 0.2 mm or more, an sufficient noise silencing effect is obtained and in addition, the fabric has an enough strength to endure in winding when a length of an adhesive tape is larger, which realizes the long sized adhesive tape with ease. When a thickness thereof is 0.6 mm or less, a size of a bundle of wire harnesses, wherein the harnesses are bound together using the adhesive tape, has no chance to grows excessively large. Since the resin layer 24 is provided on the substrate 21, a strength of the substrate material 21 is increased. When a thickness of the resin layer 24 is equal to 10µm or more, a base material thereof, for example a polyethylene film can be produced with ease and on the other hand, when a thickness of the resin layer 24 is less than 45µm or less, an impact relaxing effect is not impeded by the resin layer 24 and accordingly a noise silencing ability is never reduced. In addition, since adhesion with the opposed surface is suppressed and it is thereby made easier to unwind an adhesive tape on a reel in multiple turns, whereby workability is improved.

### (Example 1)

A pressure sensitive adhesive composition was prepared by kneading a composition composed of 100 parts by weight of butyl rubber, 50 parts by weight of a tackifier, 200 parts by weight of calcium bicarbonate, 40 parts by weight of a process oil, 45 parts by weight of a flame retardant agent and 5 parts by weight of a cross-linking agent in a kneader. Then, as shown in FIG. 1, the release agent layer 13 was provided on one surface of the substrate 11 made of cotton cloth and the adhesive composition was applied on the opposed surface of the substrate 11 to an adhesive thickness of about 0.02 mm to form the pressure sensitive adhesive layer 12. Thus a wire harness binding adhesive tape has been produced.

### (Example 2)

A pressure sensitive adhesive composition was prepared by kneading a composition composed of 100 parts by weight of butyl rubber, 50 parts by weight of a tackifier, 200 parts by weight of calcium bicarbonate, 40 parts by weight of a process oil, 45 parts by weight of a flame retardant agent and 5 parts by weight of a cross-linking agent in a kneader. Then, as shown in FIG. 2, the resin layer 24 was provided on one surface of the substrate 21 made of cotton non-woven fabric, the release agent layer 23 was provided on the resin layer 24 and the adhesive composition was applied on the opposed surface of the substrate 21 to an adhesive thickness of about 0.02 mm to form the pressure sensitive adhesive layer 22. Thus a wire harness binding adhesive tape has been produced.

### (Example 3)

A pressure sensitive adhesive composition was prepared by kneading a composition composed of 100 parts by weight of ethylene-propylene rubber, 50 parts by weight of a tackifier, 200 parts by weight of calcium bicarbonate, 40 parts by weight of a process oil, 45 parts by weight of a flame retardant agent and 5 parts by weight of a cross-linking agent in a kneader. Then, as shown in FIG. 1, the release agent layer 13 was provided on one surface of the substrate 11 made of cotton cloth and the adhesive composition was applied on the opposed surface of the substrate material 11 to an adhesive thickness of about 0.02 mm to form the adhesive layer 12. Thus a wire harness binding adhesive tape has been produced.

### (Example 4)

A pressure sensitive adhesive composition was prepared by kneading a composition composed of 100 parts by weight of butyl rubber, 50 parts by weight of a tackifier, 200 parts by weight of calcium bicarbonate, 40 parts by weight of a process oil, 45 parts by weight of a flame retardant agent and 5 parts by weight of a cross-linking agent in a kneader. Then, as shown in FIG. 2, the resin layer 24 was provided on one surface of the substrate 21 made of polyester woven fabric, the release agent layer 23 was provided on the resin layer 24 and the adhesive composition was applied on the opposed surface of the substrate material 21 to an adhesive thickness of about 0.11 mm to form the adhesive layer 22. Thus a wire harness binding adhesive tape has been produced.

### (Comparative Example 1)

A pressure sensitive adhesive composition was prepared by kneading a composition composed of 100 parts by weight of natural rubber, 100 parts by weight of a tackifier, 100 parts by weight of calcium bicarbonate, 20 parts by weight of a process oil, 100 parts by weight of a flame retardant agent and 3 parts by weight of an antiaging reagent in a kneader. Then, as shown in FIG. 1, the release agent layer 13 was provided on one surface of the substrate 11 made of cotton cloth and the adhesive composition was applied on the opposed surface of the substrate 11 to an adhesive thickness of about 0.02 mm to form the pressure sensitive adhesive layer 12. Thus a wire harness binding adhesive tape has been produced.

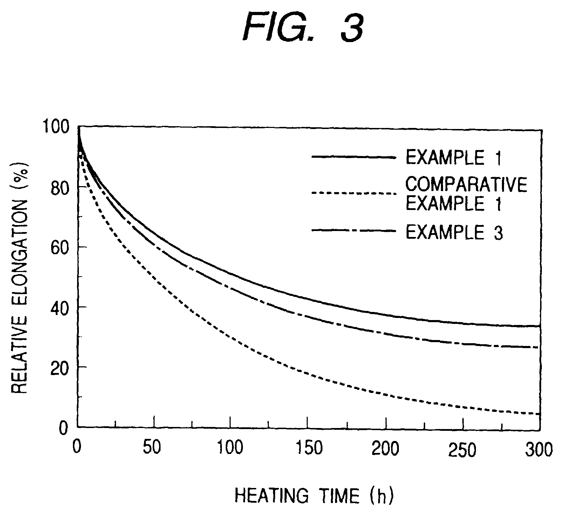

Evaluation results of characteristics of the wire harness binding adhesive tapes of Examples 1 to 4 and Comparative Example 1 are shown in Tables 1 and 2 being compiled in two groups and the evaluation results of characteristics of the wire harness binding adhesive tapes of Examples 1 and 3, and Comparative Example 1 are shown in FIG. 3.

**Table 1**

| | adhesion (gf/19mm) | adhesion to backing (gf/19mm) | low speed unwinding force (gf/19mm) |
|---|---|---|---|
| Example 1 | 840 | 1430 | 570 |
| Example 2 | 1000 | 1200 | 530 |
| Example 3 | 900 | 1270 | 600 |
| Example 4 | 750 | 850 | 450 |
| Comparative Example 1 | 430 | 640 | 550 |

**Table 2**

| heating time | 25hr | 50hr | 100hr | 200hr | 500hr | 1000hr |
|---|---|---|---|---|---|---|
| Example 1 | ○ | ○ | ○ | ○ | ○ | ○ |
| Example 2 | ○ | ○ | ○ | ○ | ○ | ○ |
| Example 3 | ○ | ○ | ○ | ○ | ○ | ○ |
| Example 4 | ○ | ○ | ○ | ○ | ○ | ○ |
| Comparative Example 1 | ○ | △ | X | X | X | X |

| | | | | | | |
|---|---|---|---|---|---|---|
| ○: a state that wire harnesses and an adhesive tape keep their flexibility and no end edge portions of the adhesive tape are peeled off. | | | | | | |
| △: a state that an adhesive tape is dried. | | | | | | |
| X: a state that a wire harness loses its flexibility and an adhesive tape fixedly sticks and some end edge portions of the adhesive tape are peeled off. | | | | | | |

Table 1 shows test results of adhesiveness related characteristics of an adhesion, an adhesion to backing and a low speed unwinding force of each adhesive tape. In this case, an adhesion was measured according to JIS Z 0237. That is, a test piece with a width of 25 mm was made to adhere to a test plate under pressure and thereafter, the test piece was peeled off at a speed of about 300 mm/min. In this situation, a required force was averaged to attain an adhesion. An adhesion to backing and a low speed unwinding force were measured according to JIS Z 0237 as well.

Table 2 shows results of heat resistant durability tests. In the tests, the adhesive tapes obtained in Examples 1 to 4 and Comparative Example 1 were used and wire harnesses were bounded with the tapes for the tests; bundles of the wire harnesses were then heated at 125°C for 1000 hr and the wire harnesses after the heat treatment were observed with the naked eye. Thus obtained observation results are shown. In the tests, a passing criterion in evaluation was that after the heat treatment, no peeling-off at an end edge portion of an adhesive tape originally adhered on a wire harness was observed and besides, wire harnesses were kept bound with a sufficient firmness.

FIG. 3 shows results of the heat resistant durability tests on the adhesive tapes of Examples 1 and 3, and Comparative Example 1, which is a relation between an elongation when being heated at 125°C, expressed with a setting of an elongation before the heat treatment as 100%, and a heating time.

As is apparent from Table 1, the adhesive tapes in each of whose pressure sensitive adhesives butyl rubber or ethylene-propylene rubber was included in the pressure sensitive adhesive are almost equal to the adhesive tape in which natural rubber is included with respect to a low speed unwinding force, but larger with respect to an adhesion and an adhesion to backing than the latter.

Besides, as is apparent from Table 2 and FIG 3, the adhesive tapes in each of whose pressure sensitive adhesives butyl rubber or ethylene-propylene rubber was included were improved on heat resistant durability as compared with the adhesive tape of Comparative Example 1 in which natural rubber was included. That is, as is apparent from Table 2, while the adhesive tapes of Examples 1 to 4 all passed the heat resistant durability tests, the adhesive tape of Comparative Example did not pass. Besides, as is apparent from FIG. 3, reduction (degradation) in elongation by the heat treatment is smaller in the adhesive tapes of Examples 1 band 3 as compared with the adhesive tape of Comparative Example 1.

In the examples described above, butyl rubber or ethylene-propylene rubber was singly used as a mixture in a pressure sensitive adhesive, but the use in combination as a mixture in the pressure sensitive adhesive, too, is useful for realization of improvement on heat resistant durability at an equivalent level to what has been described above.

As has been described above, by carrying out the present invention, there can be provided a wire harness binding adhesive tape which can endure, for a long time, use in a high temperature environment in the vicinity of an engine of an automobile or the like and which is excellent in noise silencing ability and workability.

## Claims

1. A wire harness binding adhesive tape comprising a pressure sensitive adhesive layer containing butyl rubber and/or ethylene-propylene rubber on one surface of a substrate.

2. A wire harness binding adhesive tape according to claim 1, wherein the substrate is made of cotton cloth.

3. A wire harness binding adhesive tape according to claim 2, wherein the substrate is made of cotton cloth with a thickness in the range of 0.2 to 0.6 mm and a release agent layer is provided on the opposed side surface of the substrate to the one surface thereof on which the pressure sensitive adhesive layer is provided.

4. A wire harness binding adhesive tape according to claim 1, wherein the substrate is made of non-woven fabric.

5. A wire harness binding adhesive tape according to claim 4, wherein the non-woven fabric is cotton non-woven fabric.

6. A wire harness binding adhesive tape according to claim 5, wherein a resin layer is provided on the opposed side surface of the substrate made of the cotton non-woven fabric to the one surface thereof on which the pressure sensitive adhesive layer is provided and a release agent layer is further provided on the resin layer.

7. A wire harness binding adhesive tape according to claim 6, wherein the resin layer is made of a polyolefin film.

8. A wire harness binding adhesive tape according to claim 7, wherein the resin layer is made of a polyethylene film with a thickness in the range of 10 to 35µm.

9. A wire harness binding adhesive tape according to claim 5 or 6, wherein the substrate is made of cotton non-woven fabric with a thickness in the range of 0.2 to 0.6 mm.

10. A wire harness binding adhesive tape according to claim 1, wherein a fireproofing compound or a flame retardant agent is mixed in the pressure sensitive adhesive layer containing butyl rubber and/or ethylene-propylene rubber.

11. A wire harness binding adhesive tape according to claim 1, wherein a blowing agent or an expansible thermoplastic resin is mixed in the pressure sensitive adhesive layer containing butyl rubber and/or ethylene-propylene rubber.

12. A wire harness binding adhesive tape according to claim 1, wherein a fireproofing blowing agent or a fireproofing expansible thermoplastic resin is mixed in the pressure sensitive adhesive layer containing butyl rubber and/or ethylene-propylene rubber.

13. A wire harness binding adhesive tape according to claim 1, wherein a pressure sensitive adhesive composition in the pressure sensitive adhesive layer containing butyl rubber is at least composed of 100 parts by weight of butyl rubber, 20 to 80 parts by weight of a tackifier and 15 to 50 parts by weight of a process oil.

14. A wire harness binding adhesive tape according to claim 1, wherein a pressure sensitive adhesive composition in the pressure sensitive adhesive layer containing ethylene-propylene rubber is at least composed of 100 parts by weight of ethylene-propylene rubber, 20 to 80 parts by weight of a tackifier and 15 to 50 parts by weight of a process oil.

15. A wire harness binding adhesive tape according to claim 4, wherein a polyethylene film layer with a thickness in the range of 10 to 45µm is provided on the opposed side surface of the substrate made of the non-woven fabric to the one surface thereof on which the pressure sensitive adhesive layer is provided and a release agent layer is further provided on the polyethylene film layer.

16. A wire harness binding adhesive tape according to claim 1, wherein a fireproofing compound containing no halogen element or a flame retardant agent containing no halogen element is mixed in the pressure sensitive adhesive layer containing butyl rubber and/or ethylene-propylene rubber.

17. A wire harness binding adhesive tape according to claim 1, wherein the substrate is made of polyester woven fabric.

18. A wire harness binding adhesive tape according to claim 17, wherein warp yarns constituting the polyester woven fabric each are a polyester yarn of 30 to 50 deniers and weft yarns constituting the fabric each are a polyester yarn of 80 to 120 deniers, a thickness of the fabric is in the range of 0.04 to 0.12 mm, a tensile strength in a length direction of the adhesive tape is in the range of 6 to 14 kgf/19mm and an elongation thereof is in the range of 13 to 23 %.

19. A wire harness binding adhesive tape according to claim 17, wherein a polyethylene film layer with a thickness in the range of 10 to 45µm is provided on the opposed side surface of the substrate made of the polyester woven fabric to the one surface thereof on which the pressure sensitive adhesive layer is provided and a release agent layer is further provided on the polyethylene film layer.

20. A wire harness binding adhesive tape according to claim 17, wherein a polyethylene film layer with a thickness in the range of 10 to 45µm, embossed and colored in black with carbon black is provided on the opposed side surface of the substrate made of the polyester woven fabric to the one surface thereof on which the pressure sensitive adhesive layer is provided and a release agent layer is further provided on the polyethylene film layer.

21. A wire harness binding adhesive tape according to claim 4, wherein a polyethylene film layer with a thickness in the range of 10 to 45µm, embossed and colored in black with carbon black is provided on the opposed side surface of the substrate made of the non-woven fabric to the one surface thereof on which the pressure sensitive adhesive layer is provided and a release agent layer is further provided on the polyethylene film layer.

22. A wire harness binding adhesive tape according to claim 4, wherein the substrate is non-woven fabric, across whose entire surface small through holes are distributed.

23. A wire harness binding adhesive tape according to claim 22, wherein the through holes each has an opening with a diameter in the range of 0.5 to 2 mm on the surface of the non-woven fabric and a total area of the openings of the through holes is equal to 10 to 35 % of the apparent surface area of the non-woven fabric.

## Amended claims

Statement under Art. 19.1 PCT

1. In claim 8 in the present application as filed originally, an improper numeral value of "35" has been amended to a proper numeral value of "45".
